# EUROPÄISCHE PATENTANMELDUNG

(11) **EP 3 578 472 A2**
(43) Veröffentlichungstag der Anmeldung: **11.12.2019**
(21) Anmeldenummer: 19172387.3
(22) Anmeldetag: 02.05.2019
(51) Int. Cl.: B65B 69/00, B25J 11/00

(54) **SCHNEIDKOPF UND SCHNEIDMASCHINE MIT EINEM SCHNEIDKOPF**

(30) Priorität: 06.06.2018 DE 102018113490
(71) Anmelder: ALS Automatic Logistic Solutions GmbH, 82031 Grünwald (DE)
(72) Erfinder: Hörl, Bernhard, 74391 Erligheim (DE)
(74) Vertreter: RPK Patentanwälte Reinhardt, Pohlmann und Kaufmann Partnerschaft mbB

(57) **Zusammenfassung**

Die Erfindung betrifft einen Schneidkopf (10) für eine Schneidmaschine (100), mit wenigstens einem Auftrennmittel (50, 60), insbesondere mit wenigstens einer Klinge (51, 61) mit wenigstens einer Schneide, und mit einer mit dem wenigstens einen Auftrennmittel (50, 60) zusammenwirkenden Greifeinrichtung (20), die wenigstens einen Greifer (22, 32) zum Greifen eines von dem wenigstens einen Auftrennmittel (50, 60) aufzutrennenden Umreifungsbandes (112, 114) aufweist. Das wenigstens eine Auftrennmittel (50, 60) und der wenigstens eine Greifer (22, 32 sind als integriertes Bauteil ausgebildet. Der wenigstens eine Greifer (22, 32) weist ein Backenpaar (24, 34) auf, das mit seinen Backen zumindest vor dem Greifen des Umreifungsbandes (112, 114) beidseits des Umreifungsbandes (112, 114) angeordnet ist und beim Schließen des Backenpaares (24, 34) mit einem Teil seiner Backen unter dem Umreifungsband (112, 114) angeordnet ist.

Ferner betrifft die Erfindung eine Schneidmaschine (100) mit einem Schneidkopf (10) sowie ein Verfahren zum Betreiben des Schneidkopfs (10).

## Beschreibung

### Stand der Technik

Die Erfindung betrifft einen Schneidkopf mit wenigstens einer Klinge und eine Schneidmaschine mit einem Schneidkopf.

Es ist bekannt, dass Kartons, Paletten mit Waren und dergleichen, häufig mit so genannten Umreifungsbändern gesichert sind. Meist bestehen diese aus Kunststoff und werden üblicherweise mit einem Messer, einer Schere oder dergleichen manuell aufgeschnitten.

Häufig fallen, beispielsweise in Produktionsanlagen, eine große Anzahl von mit Umreifungsbändern verschlossenen Paketen und Paletten an, die zur Produktion benötigte Komponenten enthalten, so dass ein manuelles Öffnen derselben einen Engpass im Wareneingang oder in der Produktion bedeuten kann.

Aus der DE 10205462 C1 ist eine Schneidvorrichtung zum Auftrennen von Umreifungsbändern bekannt, die um Kastenstapel gelegt sind. Ein Kastenstapel weist üblicherweise einen vertikal verlaufenden Spalt auf, über den die Umreifungsbänder horizontal verlaufen. In einer Arbeitsposition des Kastenstapels wird bei einer vertikalen Zustellbewegung entlang dieses Spaltes das Umreifungsband mit einem Sensor gesucht. Wird ein Umreifungsband detektiert, wird dieses mit einem Haken auf einer Seite des Kastenstapels erfasst und mit einem Schneidelement auf der gegenüberliegenden Seite des Kastenstapels zertrennt. Das Umreifungsband wird vom Haken an ein Ausziehelement übergeben, welches das Umreifungsband vom Kastenstapel abzieht.

### Offenbarung der Erfindung

Eine Aufgabe der Erfindung ist es, einen Schneidkopf für ein automatisiertes Auftrennen von Umreifungsbändern zu schaffen.

Eine weitere Aufgabe der Erfindung ist es, eine Schneidmaschine mit einem Schneidkopf für ein automatisiertes Auftrennen von Umreifungsbändern zu schaffen.

Eine weitere Aufgabe der Erfindung ist es, ein Verfahren zum Betreiben eines Schneidkopfs für ein automatisiertes Auftrennen von Umreifungsbändern zu schaffen.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und den Zeichnungen.

Die Erfindung geht aus von einem Schneidkopf für eine Schneidmaschine, mit wenigstens einem Auftrennmittel und mit einer mit dem wenigstens einen Auftrennmittel zusammenwirkenden Greifeinrichtung, die wenigstens einen Greifer zum Greifen eines von dem wenigstens einen Auftrennmittel aufzutrennenden Umreifungsbandes aufweist.

### Es wird vorgeschlagen

dass das wenigstens eine Auftrennmittel und der wenigstens eine Greifer als integriertes Bauteil ausgebildet sind und der wenigstens eine Greifer ein Backenpaar aufweist, das mit seinen zumindest vor dem Greifen des Umreifungsbandes beidseits des Umreifungsbandes angeordnet ist und beim Schließen des Backenpaares mit einem Teil seiner Backen unter dem Umreifungsband angeordnet ist.

Dadurch, dass das Backenpaar mit seinen Backen bei der Schließbewegung beidseits auf das Umreifungsband zubewegbar ist und unter das Umreifungsband greift, ist das Umreifungsband in dieser Phase zwischen dem Teil des Backenpaares, das unter das Umreifungsband greift und dem Auftrennmittel positioniert. Insbesondere kann das Umreifungsband vom Objekt, das es umgibt, durch das Untergreifen abgehoben werden. Ein Auftrennen des Umreifungsbands kann daher entfernt von der Oberfläche des Objekts erfolgen, wodurch eine Gefahr der Beschädigung des Objekts verringert oder vermieden werden kann. Vorteilhaft kann beim Schließen des Backenpaares das Umreifungsband zwischen den Backen festgeklemmt werden. Dies erleichtert ein sicheres Abziehen des Umreifungsbands vom Objekt.

Insbesondere kann das wenigstens eine Auftrennmittel eine Klinge mit wenigstens einer Schneide sein. Optional kann als Auftrennmittel wenigstens ein Element der Gruppe Heizdraht, Heizstempel, Ultraschalleinrichtung, Laserstrahl, eingesetzt werden, mit dem das Umreifungsband auf mechanischem und/oder thermischem Weg aufgetrennt werden kann.

Vorteilhaft wird ein kompakter Schneidkopf bereitgestellt, mit dem wenigstens einen Auftrennmittel und der wenigstens einen Greifeinheit als integralen Bestandteilen. Eine gemeinsame Zustellbewegung des wenigstens einen Auftrennmittels und des wenigstens einen Greifers zu einem mit dem Umreifungsband versehenen Objekt erfolgt von einer einzigen Seite des Objekts her, indem beispielsweise der Schneidkopf dem Objekt mit dem Umreifungsband zugestellt wird.

Der Schneidkopf kann optional an einem Roboterarm oder optional an einem Linearantrieb, etwa einem so genannten Portal mit Linearantrieben mit mehreren Achsen, insbesondere für zwei oder drei Achsen (X-Y-Portal oder X-Y-Z-Portal), angeordnet sein. Optional kann der Schneidkopf auch stationär montiert vorgesehen sein und ein Objekt, beispielsweise ein Paket oder eine Palette, mit einem oder mehreren Umreifungsbändern daran vorbeibewegt werden. Das aufgetrennte Umreifungsband kann am Objekt hängenbleiben und später entfernt werden oder optional mit einem Abstreifer abgestreift werden.

Vorteilhaft können Umreifungsbänder automatisiert aufgetrennt und gegebenenfalls abgezogen werden. Dies erlaubt zum einen eine Zeitersparnis, zum anderen kann ein Verletzungsrisiko beim Auftrennen und Entfernen von Umreifungsbändern, wie es beim manuellen Entfernen auftreten kann, vermieden werden.

Vorzugsweise ist der Schneidkopf ein kompaktes Bauteil, bei dem die entsprechenden Komponenten integriert sind. Durch das in den Schneidkopf integrierte Auftrennmittel können Antriebe und Bauteile eingespart werden. Günstigerweise können das wenigstens eine Auftrennmittel und der wenigstens eine Greifer an einer gemeinsamen Grundplatte befestigt sein. Der Greifer kann optional beweglich entlang der Grundplatte oder optional starr entlang der Grundplatte angeordnet sein. Eine Bewegung des wenigstens einen Greifers entlang der Grundplatte kann entlang einer Y-Achse erfolgen.

Die Grundplatte kann eine Kupplung zum Befestigen an einem Roboterarm aufweisen. Vorteilhaft ist das Auftrennmittel am Greifer positioniert. Greifen und Auftrennen des Umreifungsbandes kann zeitlich hintereinander oder zeitgleich ausgeführt werden. Vorteilhaft kann durch eine Relativbewegung zwischen Auftrennmittel, beispielsweise einer Klinge, und Greifer ein im Greifer gehaltenes Umreifungsband an dem Auftrennmittel aufgetrennt werden.

Optional kann durch eine Bewegung eines Teils des Greifers, beispielsweise beim Schließen des Greifers, das Auftrennmittel zeitgleich das gehaltene Umreifungsband mit dem Greifen des Umreifungsbandes auftrennen. Zweckmäßigerweise ist in diesem Fall das Auftrennmittel, beispielsweise die Klinge mit ihrer Schneide, möglichst nahe zu dem Bereich des Greifers platziert, der mit dem Umreifungsband in Berührung kommt. Optional kann das Auftrennmittel, beispielsweise die Klinge, durch eine Schließbewegung des Greifers, etwa mittels einer mechanischen Übersetzung, an das Umreifungsband zugestellt werden.

Das Umreifungsband kann von dem Objekt, das es umschließt, automatisiert entfernt, insbesondere abgezogen werden. Beispielsweise kann das Auftrennmittel bezogen auf die Grundplatte unbeweglich sein und der Greifer zum Auftrennen des Umreifungsbandes dieses an dem Auftrennmittel vorbeiführen. Dies erlaubt einen sehr kompakten und kostengünstigen Aufbau, da kein separater Antrieb für das das Auftrennmittel, erforderlich ist. Optional kann das Auftrennmittel, beispielsweise die Klinge, auf das im Greifer gehaltene Umreifungsband hin bewegt werden, indem ein Antrieb das Auftrennmittelbewegt. Letzteres ist günstig, wenn ein Roboterarm oder ein Linearantrieb den Schneidkopf insgesamt entlang der X-Achse zu dem Umreifungsband hin bewegt und wieder entfernt.

Das aufgetrennte Umreifungsband kann im Greifer von dem Objekt abgezogen werden. Optional kann ein Greifer nach dem Abziehen vom Objekt das jeweilige Umreifungsband weiter festhalten und weitere Umreifungsbänder einzeln greifen, auftrennen und vom Objekt abziehen. Hierzu kann im Greifer eine Ablage oder Haltevorrichtung für das abgezogene Umreifungsband vorgesehen sein, so dass der Greifer wieder geöffnet werden kann. Am Ende können die abgezogenen Umreifungsbänder aus dem Greifer entfernt, gesammelt und entsorgt werden. Weist der Schneidkopf zwei oder mehr Greifer auf, können zwei oder alle Greifer jeweils mehrere Umreifungsbänder auftrennen und halten.

Um den Greifer über dem Umreifungsband zu platzieren, kann der Schneidkopf eine Bewegung entlang der Y-Achse erfahren. Optional kann der Greifer separat entlang der Y-Achse bewegbar sein. Um das Umreifungsband zu greifen, kann der wenigstens eine Greifer zu dem Umreifungsband hinbewegt werden. Der Greifer kann zum Umreifungsband mittels eines Zustellantriebs hinbewegt werden, oder die Grundplatte kann mit dem Greifer zum Umreifungsband hinbewegt werden.

Die Relativbewegung zwischen Auftrennmittel, beispielsweise einer Klinge, und Greifer erfolgt optional entlang der X-Achse. Bei einer Klinge als Auftrennmittel kann deren Schneide quer zur X-Achse steht. Optional kann eine Klinge vorgesehen sein, deren Schneide nicht quer zur X-Achse steht, sondern deren Schneide quer zur Y-Achse steht. Die Schneide kann senkrecht zur X- oder Y-Achse stehen oder geneigt zu dieser Achse sein.

Die Art der Klinge kann an das aufzutrennende Umreifungsband angepasst sein. Es kann eine Klinge mit gerader Schneide vorgesehen sein. Optional kann die Schneide der Klinge entlang der X-Achse geneigt sein. Eine solche schräg verlaufende Schneide ist zum Auftrennen des Umreifungsbandes günstig, da die Klinge durch Vermeiden von punktuellen Lasten geschont wird. Optional kann eine Rundklinge vorgesehen sein. Optional kann als Klinge eine V-förmige oder gekrümmte Klinge vorgesehen sein, die ähnlich wie eine Schere schneidet.

Nach einer günstigen Ausgestaltung können die Backen des Backenpaares Zähne aufweisen, die beim Schließen des Backenpaares unter das Umreifungsband greifen. Vorteilhaft können die Zähne beim Schließen des Backenpaares ineinandergreifen. Das Umreifungsband kann hierdurch vom Objekt abgehoben werden. Das Umreifungsband kann somit aufgetrennt werden, ohne dass die Oberfläche des Objekts beschädigt wird.

Nach einer günstigen Ausgestaltung kann der Schneidkopf einen Greifer-Zustellantrieb aufweisen zum Zustellen des wenigstens einen Greifers an das aufzutrennende Umreifungsband zum Durchtrennen des Umreifungsbandes. Alternativ oder zusätzlich kann ein Zustellantrieb zum Zustellen des wenigstens einen Auftrennmittels an das aufzutrennende Umreifungsband zum Durchtrennen des Umreifungsbandes vorgesehen sein. Vorteilhaft kann der wenigstens eine Greifer mit dem Greifer-Zustellantrieb entlang der X-Achse zum Umreifungsband hin und von diesem weg bewegbar sein. Alternativ kann der Schneidkopf insgesamt entlang der X-Achse zum Umreifungsband hin und von diesem weg bewegbar sein. Eine solche Option ist mit einem Roboterarm, an dem der Schneidkopf angebracht ist, oder einem Portal, in dem der Schneidkopf entlang der X-Achse bewegbar ist, realisierbar. Zweckmäßigerweise ist in diesem Fall das Auftrennmittel, beispielsweise eine Klinge, angetrieben, um das Auftrennmittel entlang der X-Achse zu bewegen, oder das Auftrennmittel, beispielsweise die Klinge, ist so montiert, dass das Auftrennmittel beim Schließen des Greifers, wenn dieser das Umreifungsband greift, das Umreifungsband auftrennt.

Optional kann mittels eines Antriebs, beispielweise durch eine mechanische Übersetzung mit einer Abrollkurve, das Auftrennmittel, beispielsweise eine Klinge, beim Schließen des Greifers an das Umreifungsband zugestellt werden. Beim Öffnen des Greifers kann das Auftrennmittel in Gegenrichtung bewegt werden.

Nach einer günstigen Ausgestaltung können wenigstens ein Teil des wenigstens einen Greifers und das wenigstens eine Auftrennmittel relativ zueinander bewegbar angeordnet sein, so dass bei einer Relativbewegung zwischen dem Teil des wenigstens einen Greifers und dem wenigstens einen Auftrennmittel das Umreifungsband in einen Wirkungsbereich des Auftrennmittels gelangt. Dies kann mittels des Greifer-Zustellantriebs erfolgen und/oder mittels des Zustellantrieb zum Zustellen des wenigstens einen Auftrennmittels. Das Umreifungsband kann dann beispielsweise mit einer Schneide in Kontakt kommen oder, je nach gewähltem Auftrennmittel, mit einem Heizdraht, einem Heizstempel, einer Ultraschalleinrichtung, einem Laserstrahl oder dergleichen. Der Greifer-Zustellantrieb kann den Greifer insgesamt bewegen. Optional kann ein oder können beide Backen des Backenpaares eine Rampe aufweisen, auf der das Umreifungsband beim Schließen der Backen vom Objekt wegbewegt werden kann und hierdurch in den Wirkbereich des Auftrennmittels gelangen kann. Beispielsweise können Zähne des Beckenpaares entsprechend angeschrägt sein, so dass das Umreifungsband, wenn der Teil des Backenpaares beim Schließen des Backenpaares unter dem Umreifungsband angeordnet ist, auf der Rampe gleitet und sich damit automatisch vom Objekt wegbewegt.

Nach einer günstigen Ausgestaltung kann eine Sensoreinheit im Schneidkopf integriert sein, welche eine Lage des aufzutrennenden Umreifungsbandes relativ zum Schneidkopf und/oder relativ zur Greifeinrichtung und/oder relativ zum wenigstens einen Greifer erkennt. Bevorzugt kann die Sensoreinheit bezogen auf die Greifeinrichtung vorlaufend angeordnet sein. Die Sensoreinheit kann einen optischen Sensor umfassen, insbesondere einen Lasertaster. Dies bietet die Möglichkeit, eine genaue Abstandsmessung zu dem Objekt, das von dem Umreifungsband umgeben ist sowie zu dem Umreifungsband vorzunehmen. Die Sensoreinheit kann ein Bilderkennungssystem umfassen, welche ein Umreifungsband durch Bilderkennung identifizieren kann. Die Sensoreinheit kann einen mechanischen Sensor umfassen, bei dem ein mechanischer Fühler über das Objekt streicht und durch eine Auslenkung das Umreifungsband erkennt.

Ebenso können Kombinationen von unterschiedlich wirkenden Sensoreinheiten vorgesehen sein. Je nach zu bearbeitendem Objekt kann eine oder mehrere geeignete Sensoreinheiten ausgewählt werden. Die Sensoreinheit kann weiter vorteilhaft dazu genutzt werden, Abmessungen des Objekts, etwa eines Kartons oder einer Palette, zu erkennen.

So kann eine vordere Kante und eine rückwärtige Kante des Objekts bestimmt werden und damit ein Verfahrweg des Schneidkopfs in Richtung der Y-Achse abgeleitet werden.

Die Lage des aufzutrennenden Umreifungsbandes am Objekt kann mit wenigstens einer Sensoreinheit erfolgen, welche im Schneidkopf integriert ist. Optional kann wenigstens eine Sensoreinheit entfernt von dem Schneidkopf vorgesehen sein. Weiterhin können mehrere Sensoreinheiten vorgesehen sein, die alle im Schneidkopf integriert sein können oder von denen wenigstens ein Teil separat vorm Schneidkopf vorgesehen sein kann.

Nach einer günstigen Ausgestaltung können die Sensoreinheit und die Greifeinrichtung auf einer gemeinsamen Grundplatte angeordnet sein. Dies ermöglicht eine kompakte Bauweise des Schneidkopfs.

Nach einer günstigen Ausgestaltung kann die Greifeinrichtung wenigstens zwei Greifer aufweisen. Dies ist vorteilhaft, wenn am Objekt wenigstens zwei Umreifungsbänder oder auch mehrere Umreifungsbänder vorhanden sind. Insbesondere können die wenigstens zwei Greifer in einem konstanten Abstand zueinander angeordnet vorgesehen sein. Dies ist vorteilhaft, wenn mehrere Umreifungsbänder an einem Objekt abgezogen werden sollen. Alternativ können die wenigstens zwei Greifer in einem veränderlichen Abstand zueinander angeordnet vorgesehen sein. Hiermit kann der Schneidkopf flexibel auf unterschiedliche Abstände von Umreifungsbändern und unterschiedliche Größen von Objekten mit Umreifungsbändern angepasst werden. An der Grundplatte kann ein entsprechender Linearantrieb für einen, zwei oder mehrere Greifer angeordnet sein, so dass der Abstand während der Bearbeitung von Objekten verändert werden kann.

Nach einer günstigen Ausgestaltung kann die Greifeinrichtung in einem konstanten Abstand zur Sensoreinheit angeordnet vorgesehen sein. Dies erlaubt eine kompakte, kostengünstige Ausgestaltung des Schneidkopfs. Alternativ kann die Greifeinrichtung wenigstens bereichsweise in einem veränderlichen Abstand zur Sensoreinheit angeordnet vorgesehen sein.

Nach einer günstigen Ausgestaltung kann das wenigstens eine Auftrennmittel in Zustellrichtung des Greifer-Zustellantriebs in einer konstanten Position angeordnet vorgesehen sein. Dies ist eine kostengünstige Variante, da ein separater Antrieb für das wenigstens eine Auftrennmittel entfallen kann. Ebenso kann Gewicht am Schneidkopf eingespart und der Energieverbrauch reduziert werden.

Das Auftrennen des Umreifungsbandes kann zuverlässig beim Zurückziehen des Greifers mit im Greifer gegriffenem Umreifungsband vom Objekt erfolgen.

Nach einer günstigen Ausgestaltung kann das wenigstens eine Auftrennmittel in Zustellrichtung des Greifer-Zustellantriebs in einer veränderlichen Position angeordnet vorgesehen sein. Dies erlaubt eine höhere Flexibilität des Schneidkopfs.

Nach einer günstigen Ausgestaltung kann eine Datenübertragungseinrichtung vorgesehen sein, mit der eine Lage des von dem wenigstens einen Auftrennmittel aufzutrennenden Umreifungsbandes an eine Steuer- und/oder Regeleinrichtung übermittelbar ist. Die Datenübertragungseinrichtung kann ein Kabel umfassen und/oder eine Sende-Empfängereinrichtung oder dergleichen. Das Auffinden, Greifen, Auftrennen und Abziehen des Umreifungsbandes kann vollautomatisch erfolgen.

Nach einem weiteren Aspekt der Erfindung wird eine Schneidmaschine vorgeschlagen mit wenigstens einem erfindungsgemäßen Schneidkopf. Die Schneidmaschine weist wenigstens eine erste Bearbeitungsstation auf, wobei der Schneidkopf an der wenigstens einer ersten Bearbeitungsstation angeordnet ist. Die Bearbeitungsstation kann manuell beladen werden, indem ein Objekt, etwa eine Palette oder ein Karton, mit einem oder mehreren Umreifungsbändern in der Bearbeitungsstation platziert wird. Optional kann ein Transportband vorgesehen sein, auf dem das oder die Objekte zur Bearbeitungsstation mit dem Schneidkopf transportiert wird. Vorzugsweise ist eine Fixiervorrichtung vorgesehen, mit der das Objekt in Bearbeitungsposition fixiert, insbesondere eingespannt wird.

Nach einer günstigen Ausgestaltung der Schneidmaschine können mehrere Bearbeitungsstationen parallel vorgesehen sein. Hierdurch kann ein hoher Durchsatz beim Entfernen von Umreifungsbändern erreicht werden.

Nach einer günstigen Ausgestaltung der Schneidmaschine kann eine Sammeleinrichtung zum Sammeln von durch den wenigstens einen Schneidkopf durchtrennten Umreifungsbändern vorgesehen sein. Die Umreifungsbänder können bequem entsorgt und/oder wiederverarbeitet werden. Gegebenenfalls kann eine Zerkleinerungsanlage vorgesehen sein, in der die abgezogenen Umreifungsbänder zerkleinert und auf diese Weise kompakt gesammelt werden.

Nach einer günstigen Ausgestaltung der Schneidmaschine kann der wenigstens eine Schneidkopf an einem Roboterarm befestigt sein. Die Anordnung ist platzsparend. Ferne kann ein Roboterarm aufgrund seiner vielen Freiheitsgrade an mehreren Seiten von Objekten mit Umreifungsbändern umgeben sein, welche von dem Roboterarm bearbeitet werden können.

Nach einer günstigen Ausgestaltung der Schneidmaschine kann der wenigstens eine Schneidkopf an einem X-Y-Portal oder X-Y-Z-Portal befestigt sein. Der Schneidkopf kann mit einem entsprechenden Linearantrieb beispielsweise in Richtung einer X-Achse und in Richtung einer Y-Achse zu dem aufzutrennenden Umreifungsband bewegt werden. Alternativ kann das Objekt zu dem Schneidkopf hin bewegt werden. Die Sensoreinheit kann jeweils die Lage des Objekts und des wenigstens einen Umreifungsbandes erkennen und der Regel- und/oder Steuereinrichtung weiterleiten.

Nach einem weiteren Aspekt der Erfindung wird ein Verfahren zum Betreiben eines erfindungsgemäßen Schneidkopfs für eine erfindungsgemäße Schneidmaschine vorgeschlagen. Das Verfahren ist durch die Schritte gekennzeichnet
- Detektieren einer Lage eines aufzutrennenden Umreifungsbandes;
- Zustellen des Schneidkopfs an das aufzutrennenden Umreifungsband;
- Greifen des Umreifungsbandes durch den Greifer;
- Abheben des Umreifungsbandes mit dem Greifer;
- Auftrennen des Umreifungsbandes durch ein Auftrennmittel durch eine Relativbewegung zwischen wenigstens einem Teil des Greifers und dem Auftrennmittel.

Das Greifen und Auftrennen des Umreifungsbandes kann in zeitlicher Abfolge erfolgen oder praktisch gleichzeitig. Die Relativbewegung zwischen Greifer und Auftrennmittel, beispielsweise einer Klinge, kann entlang der X-Achse erfolgen, indem das Auftrennmittel starr und der Greifer beweglich ist und/oder indem das Auftrennmittel beweglich und der Greifer starr ist.

Optional kann der Greifer das Auftrennmittel, beispielsweise eine Klinge, beim Schließen des Greifers entlang der X-Achse bewegen, indem eine mechanische Übersetzung, beispielsweise an Backenpaaren des Greifers, vorgesehen ist und das Auftrennmittel, beispielsweise die Klinge, über eine Abrollbewegung entlang der X-Achse bewegt wird. Beim Öffnen des Greifers kann das Auftrennmittel in Gegenrichtung bewegt werden.

Die Lage des aufzutrennenden Umreifungsbandes kann mit einer Sensoreinheit erfolgen, welche im Schneidkopf integriert ist. Optional kann die Sensoreinheit entfernt von dem Schneidkopf vorgesehen sein. Weiterhin können mehrere Sensoreinheiten vorgesehen sein, die alle im Schneidkopf integriert sein können oder von denen wenigstens ein Teil separat vorm Schneidkopf vorgesehen sein kann.

Vorteilhaft kann eine Bearbeitung von Objekten wie Kartons und/oder Paletten, bei der Umreifungsbänder von den Objekten abgezogen werden sollen, automatisiert schnell und zuverlässig mit einem kompakten Werkzeug erfolgen.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Vorderansicht eines Schneidkopfes mit einer Sensoreinheit und einer Greifeinrichtung mit einem Greifer nach einem Ausführungsbeispiel der Erfindung mit einem Zustellantrieb am Greifer;
- Fig. 2: eine Seitenansicht des Schneidkopfes nach Figur 1;
- Fig. 3: eine perspektivische Darstellung eines Schneidkopfs ähnlich dem Ausführungsbeispiel in Figur 1 über einem mit Umreifungsbändern versehenen Karton in einer Bearbeitungsstation einer Schneidmaschine, wobei kein Zustellantrieb am Greifer vorgesehen ist;
- Fig. 4-6: eine Abfolge von Verfahrensschritten beim Entfernen eines Umreifungsbandes von einem Karton mittels eines Schneidkopfs ähnlich dem Ausführungsbeispiel in Figur 1, nach dem Zustellen des Greifers an das Umreifungsband (Figur 4), beim Greifen des Umreifungsbandes (Figur 5) und beim Anheben und Auftrennen des Umreifungsbandes (Figur 6);
- Fig. 7: eine Vorderansicht eines Schneidkopfes mit einer Sensoreinheit und einer Greifeinrichtung mit zwei Greifern nach einem weiteren Ausführungsbeispiel der Erfindung, welche einen festen Abstand zueinander aufweisen;
- Fig. 8: eine Vorderansicht eines Schneidkopfes mit einer Sensoreinheit und einer Greifeinrichtung mit zwei Greifern nach einem weiteren Ausführungsbeispiel der Erfindung, wobei die Greifer gegeneinander verschiebbar sind, um ihren gegenseitigen Abstand zu variieren;
- Fig. 9-18: eine Abfolge von Verfahrensschritten beim Entfernen von Umreifungsbändern von einem Karton mit zwei Umreifungsbändern mittels eines Schneidkopfs nach Fig. 7.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

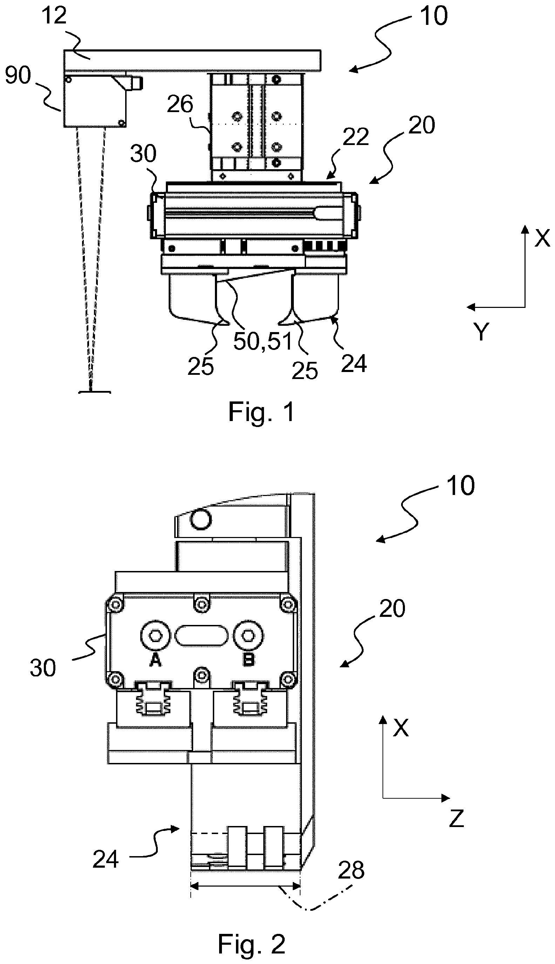

In den Figuren 1 und 2 ist ein erstes Ausführungsbeispiel der Erfindung beschrieben.

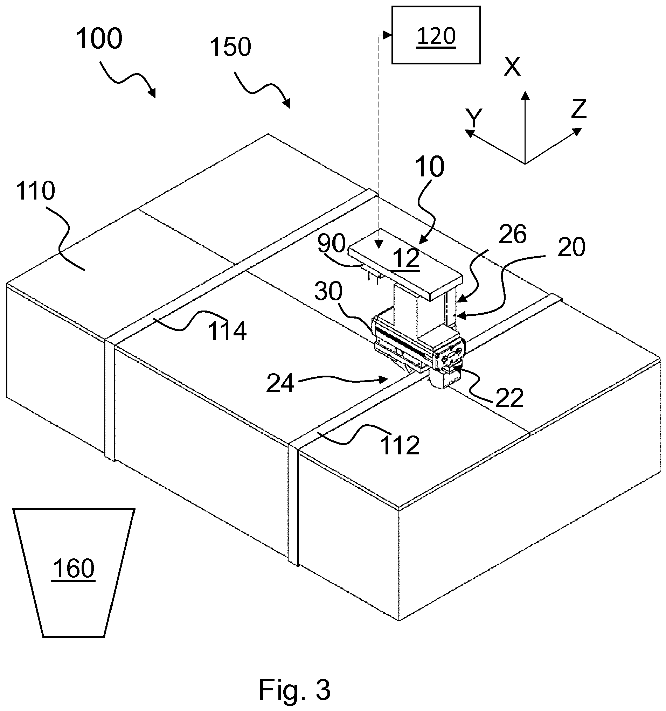

Das Ausführungsbeispiel der Figuren 1 und 2 ist mit dem Ausführungsbeispiel der Figuren 3 bis 6 gemeinsam beschrieben.

Figur 1 zeigt eine Vorderansicht eines Schneidkopfes 10 mit einer Sensoreinheit 90 und einer Greifeinrichtung 20 mit einem Greifer 22 nach einem Ausführungsbeispiel der Erfindung, wobei der Greifer 22 mit einem Zustellantrieb 26 entlang einer X-Achse zum einem Objekt, das mit einem Umreifungsband 112 umgeben ist, antreibbar ist. Die X-Achse entspricht hier beispielsweise einer Hochachse. Figur 2 zeigt eine Seitenansicht des Schneidkopfes 10 nach Figur 1. Der Schneidkopf 10 weist ein Backenpaar 24 auf, das sich um eine Länge 28 in Richtung einer Z-Achse erstreckt. Die Z-Achse entspricht hier einer Querachse. Das Umreifungsband erstreckt sich in dem Bereich, in dem es aufgetrennt werden soll, im Wesentlichen in Richtung der Z-Achse. Die Länge 28 ist so bemessen, dass ein Umreifungsband im Backenpaar über einen entsprechenden Längsabschnitt sicher gehalten werden kann. Die Y-Achse entspricht beispielsweise einer Längsachse.

Die Figuren 3 bis 6 zeigen ein weiteres Ausführungsbeispiel der Erfindung ähnlich wie in den Figuren 1 und 2, wobei der Greifer 22 der Greifeinrichtung 20 keinen Zustellantrieb aufweist, der diesen entlang der X-Achse bewegt, sondern starr bezogen auf die X-Achse ist. In diesem Fall ist der Schneidkopf 10 an einem Roboterarm oder einem Portal mit Zustellantrieb für den Schneidkopf 10 angeordnet. Figur 3 zeigt eine perspektivische Darstellung des Schneidkopfs 10 über einem mit Umreifungsbändern 112, 114 versehenen Objekt in Form eines Kartons 110 in einer Schneidstation 100. Figur 3 zeigt den Schneidkopf 10 über einem mit Umreifungsbändern 112, 114 versehenen Karton 110 in einer Bearbeitungsstation 150 einer Schneidmaschine 100.

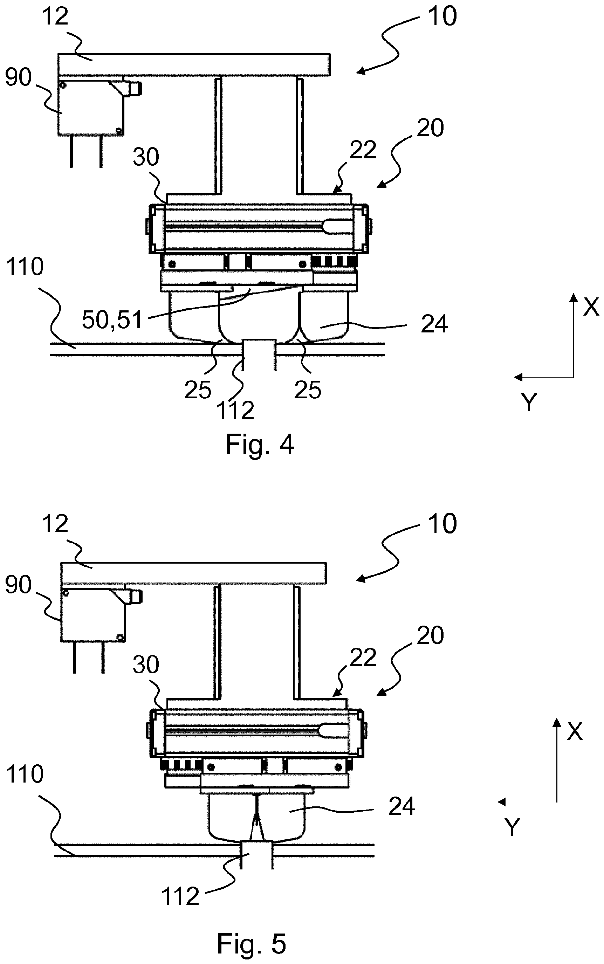

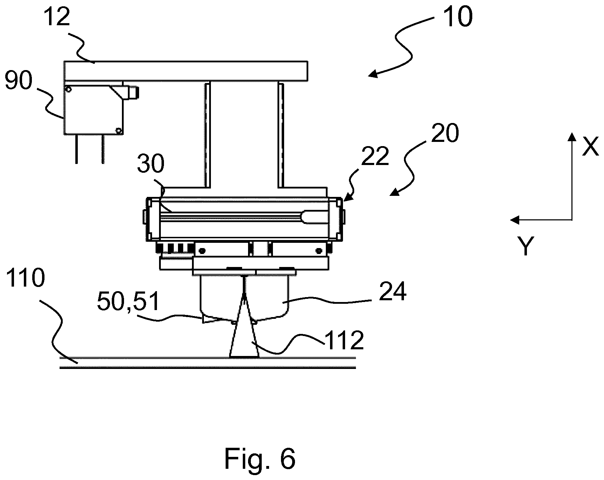

Die Figuren 4 bis 6 illustrieren eine Abfolge von Verfahrensschritten beim Entfernen eines Umreifungsbandes 112 von einem Objekt in Form eines Kartons 110 mittels des Schneidkopfs 10 nach Figur 1, nach dem Zustellen des Greifers 22 an das Umreifungsband 112 (Figur 4), beim Greifen des Umreifungsbandes 112 (Figur 5) und beim Anheben und Auftrennen des Umreifungsbandes 112 (Figur 6).

Greifer 22 und Sensoreinheit 90, in diesem Beispiel ein Lasertaster, sind an einer gemeinsamen Grundplatte 12 angeordnet. Die Sensoreinheit 90 richtet beispielsweise zwei mittels unterbrochenen Linien dargestellte konvergierende Laserstrahlen auf ein Objekt in Form eines Karton 110, das mit einem oder mehreren Umreifungsbändern 112 umgeben ist. Der Lasertaster kann den Abstand zu dem Objekt mit hoher Genauigkeit erfassen und die Daten an eine Regel- und/oder Steuereinheit 120 weiterleiten (Figur 3). Die Regel- und/oder Steuereinheit 120 kann beispielsweise einen Roboterarm an dem der Schneidkopf 10 angeordnet ist oder ein Portal mit Linearantrieben für zwei oder drei Achsen, in dem der Schneidkopf 10 montiert ist, steuern.

Der Schneidkopf 10 weist eine X-Achse, eine Y-Achse und eine Z-Achse auf, die jeweils senkrecht zueinander stehen. Der Schneidkopf 10 bewegt sich entlang der Y-Achse, wenn die Sensoreinheit 90 das Objekt nach einem Umreifungsband 112 absucht. Ebenso kann die Sensoreinheit 90 Anfang und Ende des Objekts, d.h. dessen Längserstreckung entlang der Y-Achse, erkennen. Das Umreifungsband 112 ist in Richtung der X-Achse von dem Greifer 22 entfernt.

Der Greifer 22 ist beispielsweise mit einem Backenpaar 24 ausgestattet, zwischen dem das Umreifungsband 112 gegriffen werden kann. Hierzu kann ein Schließantrieb 30 die Backen des Backenpaares 24 schließen, so dass das Umreifungsband 112 im Backenpaar 24 eingeklemmt ist. Bei Bedarf kann der Schließantrieb 30 das Backenpaar 24 wieder öffnen. Die Backen des Backenpaares 24 sind kammartig mit Zähnen 25 ausgebildet (Figur 2), so dass die Backen mit der Kammstruktur ineinander greifen und das Umreifungsband 112 festklemmen können. Wie in Figur 2 zu erkennen ist, erstrecken sich die Backen des Backenpaares 24 durch die kammartige Ausgestaltung der Backen mit der Länge in Richtung der Z-Achse 28, so dass das Umreifungsband 112 auf einer ausreichenden Teilabschnitt sicher zwischen den Backen geklemmt werden kann.

In der Figur 1 ist hinter dem Greifer 22 als Auftrennmittel 50 eine Klinge 51 angeordnet, die in diesem Beispiel eine schräge Schneide aufweist. Die Klinge 51 kann beispielsweise gegenüber der Grundplatte 12 feststehend vorgesehen sein.

Nach Auffinden und Erkennen der Lage des Umreifungsbandes 112 durch die Sensoreinheit 90 wird der Greifer 22 der Greifeinrichtung 20 oberhalb des Umreifungsbandes 112 platziert. Sodann wird der Greifer 22 an das Umreifungsband 112 angelegt (Figur 4). Vor dem Greifen des Umreifungsbandes 112 sind die Backen des Backenpaares 24 mit den Zähnen 25 links und rechts an dem beiden Schmalseiten des Umreifungsbandes 112 platziert.

Das Umreifungsband 112 wird vom Greifer 22 ergriffen und im Backenpaar 24 eingeklemmt (Figur 5). Dabei kann das Backenpaar 24 mit den Zähnen 25 seiner Backen von beiden Seiten unter das Umreifungsband 112 greifen.

Wird der Greifer 22 mit eingeklemmtem Umreifungsband 112 angehoben (Figur 6), fährt das eingeklemmte Umreifungsband 112 entlang der X-Achse zwangsläufig an der Klinge 51 vorbei und wird aufgetrennt. Bewegt sich der Greifer 22 weiter entlang der X-Achse vom Objekt weg, wird das nach wie vor eingeklemmte Umreifungsband 112 vom Objekt gelöst und abgezogen, wobei auch eine Bewegung des Schneidkopfs 10 in Richtung der Y-Achse erfolgen kann. Zur Bewegung des Greifers 22 entlang der X-Achse kann ein Zustellantrieb 26 vorgesehen sein.

Die abgezogenen Umreifungsbänder 112 können in einer Sammeleinrichtung 160 gesammelt und entsorgt werden (Figur 3).

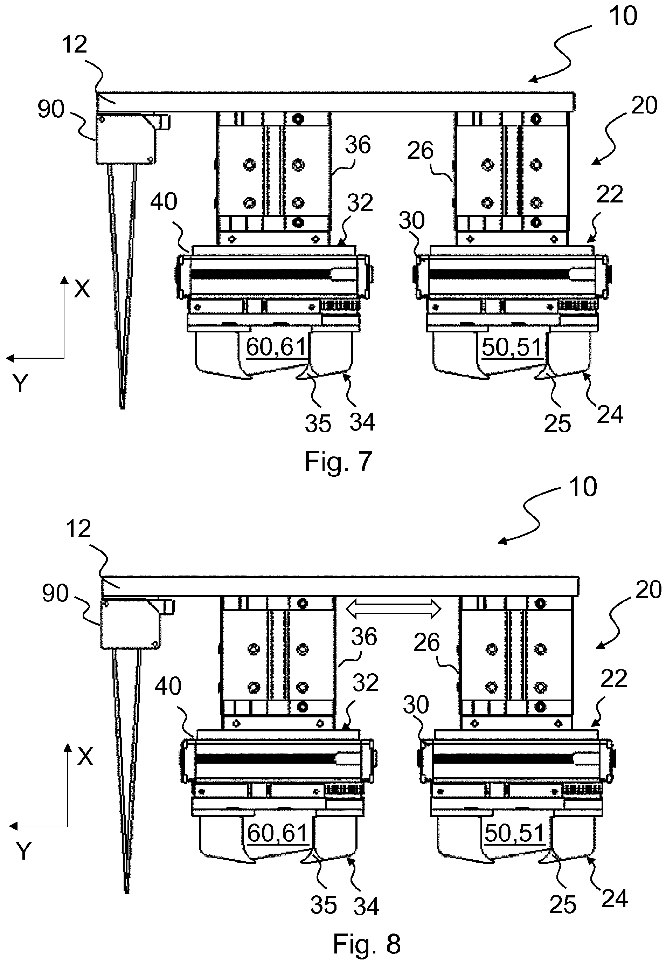

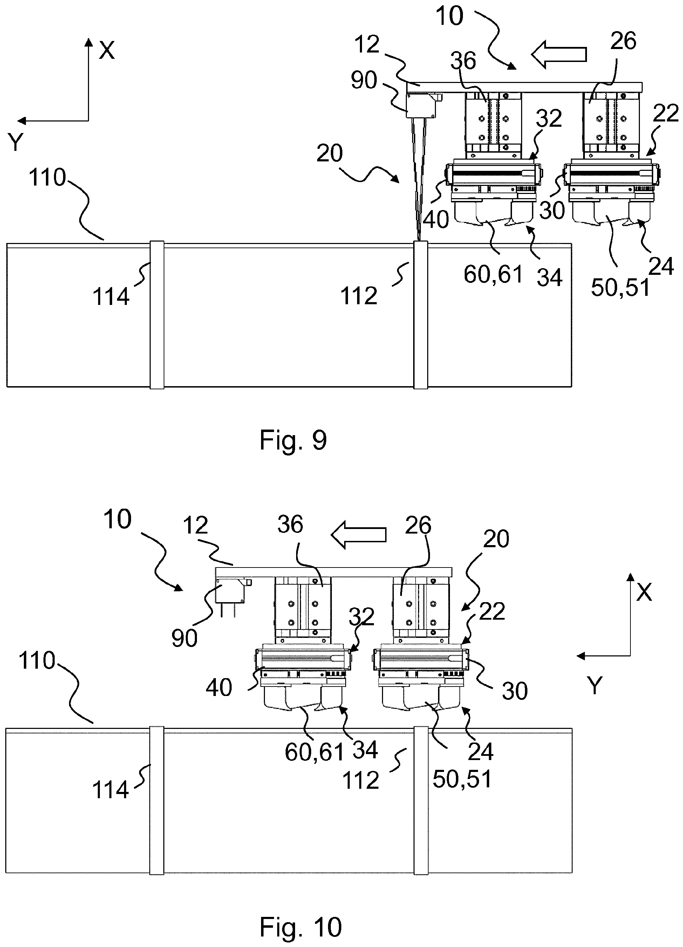

Die Figuren 7 bis 18 zeigen ein weiteres Ausführungsbeispiel der Erfindung, wobei Figur 8 eine Variante eines Schneidkopfes 10 aus Figur 7 zeigt. Figur 7 zeigt eine Vorderansicht eines Schneidkopfes 10 mit einer Sensoreinheit 90 und einer Greifeinrichtung 20 mit zwei Greifern 22, 32 nach einem weiteren Ausführungsbeispiel der Erfindung, welche einen festen Abstand zueinander aufweisen. Figur 8 zeigt eine Vorderansicht eines Schneidkopfes 10 mit einer Sensoreinheit 90 und einer Greifeinrichtung 20 mit zwei Greifern 22, 32 nach einem weiteren Ausführungsbeispiel der Erfindung, wobei die Greifer 22, 32 gegeneinander verschiebbar sind, um ihren gegenseitigen Abstand zu variieren, was durch einen breiten Doppelpfeil unter der Grundplatte 12 angedeutet ist. Diese Varianten sind vorteilhaft, wenn an einem Objekt (Figuren 9 bis 18) zwei oder mehr aufzutrennende Umreifungsbänder 112, 114 angeordnet sind (Figuren 9 bis 18).

Die Figuren 9 bis 18 zeigen eine Abfolge von Verfahrensschritten beim Entfernen von Umreifungsbändern 112, 114 von einem Objekt in Form eines Kartons 110 mit zwei Umreifungsbändern 112, 114 mittels eines Schneidkopfs 10 nach Figur 7.

In den Figuren 7 und 8 sind hinter dem Greifer 22 als Auftrennmittel 50 eine Klinge 51 und hinter dem Greifer 32 als Auftrennmittel 60 eine Klinge 61 angeordnet, die in diesem Beispiel jeweils eine schräge Schneide aufweisen. Die Klingen 51, 61 können beispielsweise gegenüber der Grundplatte 12 feststehend vorgesehen sein.

Der erste Greifer 22 ist beispielsweise mit einem Backenpaar 24 und der zweite Greifer 32 mit einem Backenpaar 34 ausgestattet, zwischen dem das Umreifungsband 112, 114 gegriffen werden kann. Hierzu kann ein Schließantrieb 30 die Backen des Backenpaares 24 bzw. ein Schließantrieb 40 die Backen des Backenpaares 34 schließen, so dass das jeweilige Umreifungsband 112, 114 im jeweiligen Backenpaar 24, 34 eingeklemmt ist. Bei Bedarf kann der Schließantrieb 30, 40 das Backenpaar 24, 34 wieder öffnen. Die Backen des Backenpaares 24, 34 können wie im vorstehend erläuterten Ausführungsbeispiel kammartig mit Zähnen 25, 35 ausgebildet sein.

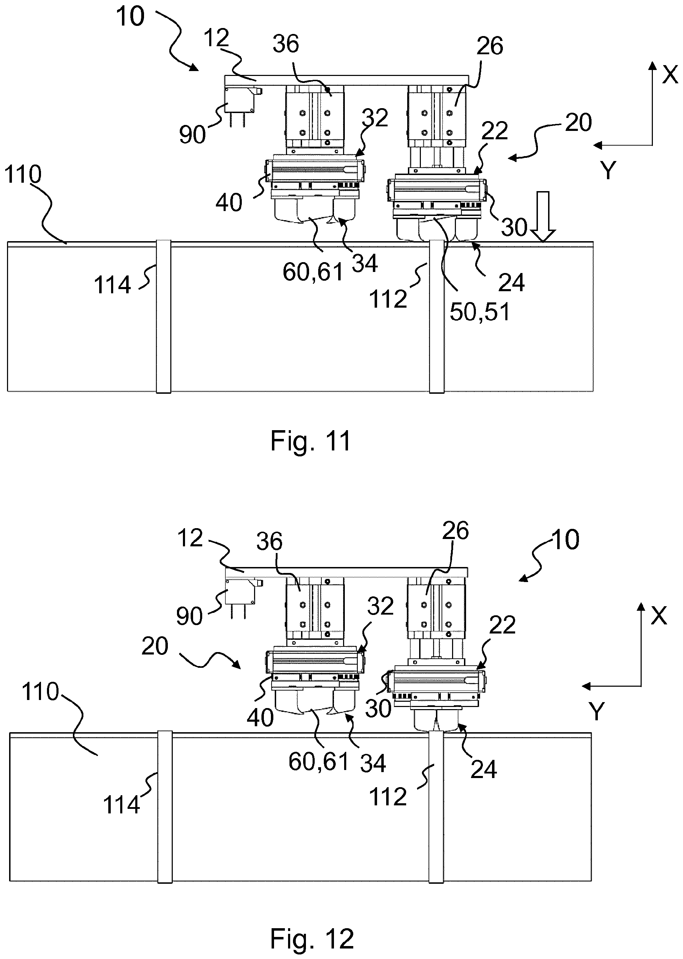

Nach Auffinden und Erkennen der Lage des ersten Umreifungsbandes 112 auf dem Karton 110 durch die Sensoreinheit 90 (Figur 9) wird der erste Greifer 22 oberhalb des Umreifungsbandes platziert (Figur 10), der Greifer 22 an das Umreifungsband angelegt (Figur 11), das Umreifungsband vom Greifer 22 ergriffen und im Backenpaar 24 eingeklemmt (Figur 12).

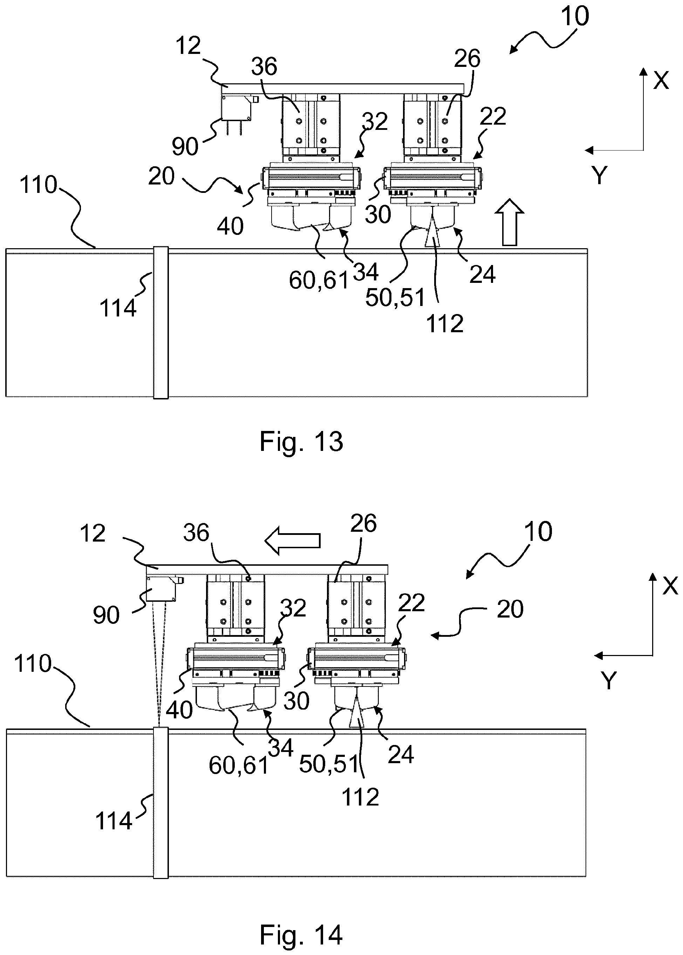

Wird der Greifer 22 mit eingeklemmtem Umreifungsband 112 angehoben (Figur 13), fährt das eingeklemmte Umreifungsband 112 entlang der X-Achse zwangsläufig an der Klinge 51 vorbei und wird aufgetrennt. Bewegt sich der Greifer 22 weiter entlang der X-Achse vom Karton 110 weg, wird das nach wie vor eingeklemmte Umreifungsband 112 vom Karton 110 gelöst und abgezogen, wobei auch eine Bewegung des Schneidkopfs 10 in Richtung der Y-Achse erfolgen kann. Zur Bewegung des Greifers 22 entlang der X-Achse kann ein Zustellantrieb 26 vorgesehen sein.

Der Schneidkopf 10 bewegt sich weiter entlang der Y-Achse (Figur 14), bis die Sensoreinheit 90 ein weiteres Umreifungsband 114 erkennt. Das im ersten Greifer 22 eingeklemmte Umreifungsband 112 wird dabei mitgenommen.

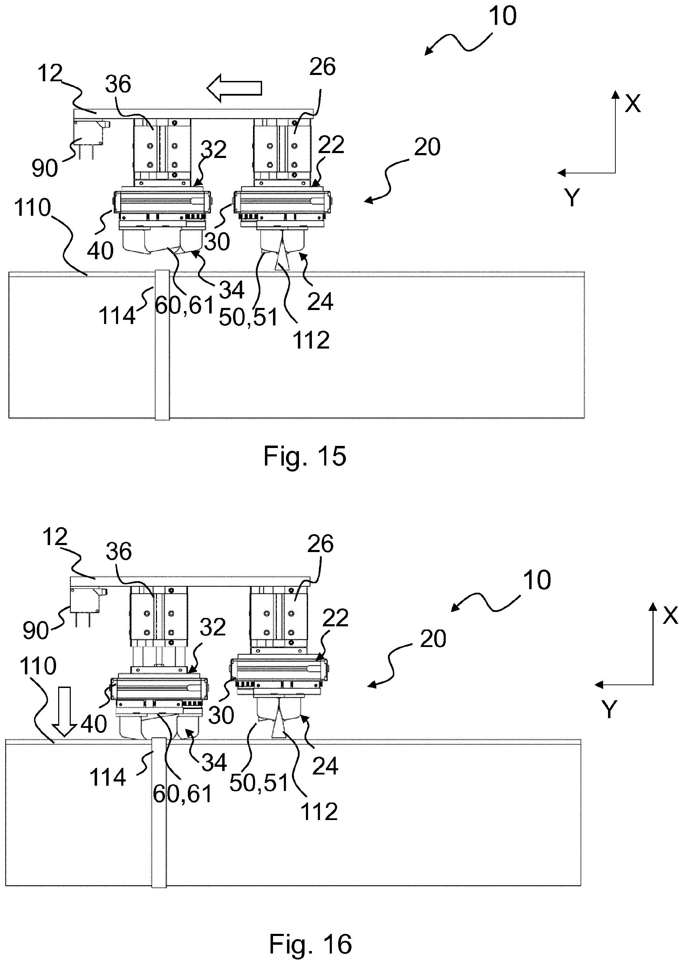

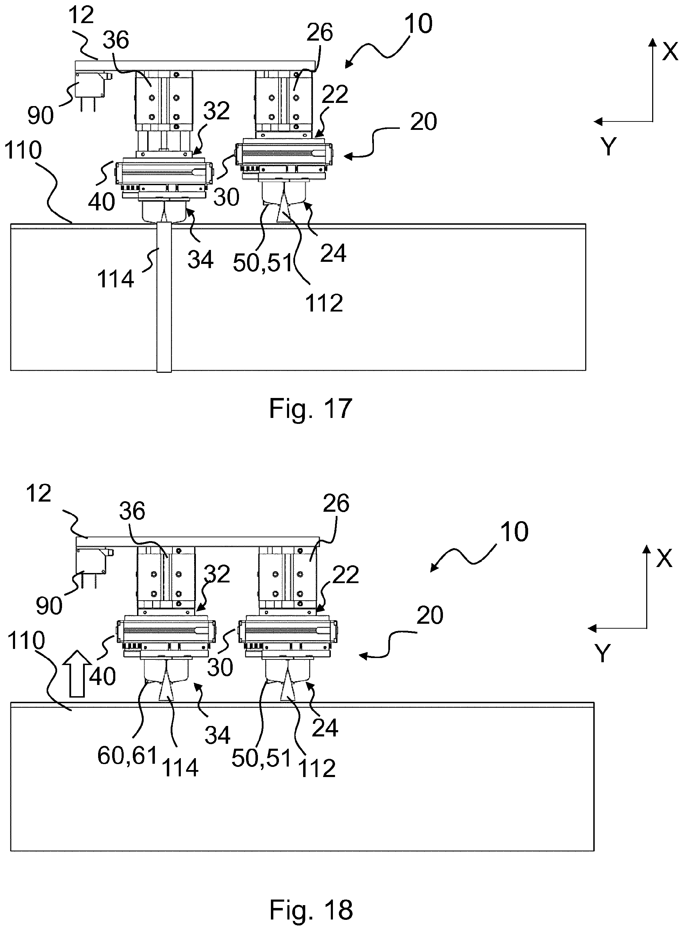

Nach Auffinden und Erkennen der Lage des weiteren Umreifungsbandes 114 auf dem Karton 110 durch die Sensoreinheit 90 wird der zweite Greifer 32 oberhalb des weiteren Umreifungsbandes 114 platziert (Figur 15), der Greifer 32 an das Umreifungsband angelegt (Figur 16), das Umreifungsband vom Greifer 32 ergriffen und im Backenpaar 34 eingeklemmt (Figur 17).

Wird der Greifer 32 mit eingeklemmtem Umreifungsband 114 angehoben (Figur 18), fährt das eingeklemmte Umreifungsband 114 entlang der X-Achse zwangsläufig an der Klinge 61 vorbei und wird aufgetrennt. Bewegt sich der Greifer 32 weiter entlang der X-Achse vom Karton 110 weg, wird das nach wie vor eingeklemmte Umreifungsband 114 vom Karton 110 gelöst und abgezogen, wobei auch eine Bewegung des Schneidkopfs 10 in Richtung der Y-Achse erfolgen kann. Zur Bewegung des Greifers 32 entlang der X-Achse kann ein Zustellantrieb 36 vorgesehen sein.

In den Ausführungsbeispielen ist eine Sensoreinheit 90 vorgesehen. Es versteht sich, dass auch mehrere Sensoreinheiten 90 vorgesehen sein können. Weiter ist die Sensoreinheit 90 in den Ausführungsbeispielen an der Grundplatte 12 angeordnet. Es versteht sich, dass der Schneidkopf 10 keine Sensoreinheit 90 aufweist, sondern eine oder mehrere Sensoreinheit 90 separat vom Schneidkopf 10 vorgesehen sein kann. Ferner kann vorgesehen sein, Sensoreinheiten 90 sowohl am Schneidkopf 10 als auch separat vom Schneidkopf 10 vorzusehen.

Es kann vorgesehen sein, die Klinge 51, 61 entlang der X-Achse starr anzuordnen, oder einen Antrieb für die Klinge 51, 61 vorzusehen. Optional kann vorgesehen sein, die Klinge 51, 61 mittels einer Bewegung des Greifers 22, 32, insbesondere der Backenpaare 24, 34, entlang der X-Achse zu bewegen. Hierzu kann am Greifer 22, 32 eine mechanische Übersetzung mit einer Abrollkurve vorgesehen sein, die beim Schließen des Backenpaares 24, 34 die Klinge 51, 61 zum Umreifungsband 112, 114 zustellt und beim Öffnen des Backenpaares 24, 34 vom Umreifungsband 112, 114 entfernt.

## Patentansprüche

1. Schneidkopf (10) für eine Schneidmaschine (100), mit wenigstens einem Auftrennmittel (50, 60), insbesondere mit wenigstens einer Klinge (51, 61) mit wenigstens einer Schneide, und mit einer mit dem wenigstens einen Auftrennmittel (50, 60) zusammenwirkenden Greifeinrichtung (20), die wenigstens einen Greifer (22, 32) zum Greifen eines von dem wenigstens einen Auftrennmittel (50, 60) aufzutrennenden Umreifungsbandes (112, 114) aufweist,
**dadurch gekennzeichnet, dass**
das wenigstens eine Auftrennmittel (50, 60) und der wenigstens eine Greifer (22, 32) als integriertes Bauteil ausgebildet sind und der wenigstens eine Greifer (22, 32) ein Backenpaar (24, 34) aufweist, das mit seinen Backen zumindest vor dem Greifen des Umreifungsbandes (112, 114) beidseits des Umreifungsbandes (112, 114) angeordnet ist und beim Schließen des Backenpaares (24, 34) mit einem Teil seiner Backen unter dem Umreifungsband (112, 114) angeordnet ist.

2. Schneidkopf nach Anspruch 1, **dadurch gekennzeichnet, dass** die Backen des Backenpaares (24, 34) Zähne (25, 35) aufweisen, die beim Schließen des Backenpaares (24, 34) unter das Umreifungsband (112, 114) greifen.

3. Schneidkopf nach Anspruch 1 oder 2, **gekennzeichnet durch** einen Greifer-Zustellantrieb (26, 36) zum Zustellen des wenigstens einen Greifers (22, 32) an das aufzutrennende Umreifungsband (112, 114) zum Durchtrennen des Umreifungsbandes (112, 114), und/oder einen Zustellantrieb zum Zustellen des wenigstens einen Auftrennmittels (50, 60) an das aufzutrennende Umreifungsband (112, 114) zum Durchtrennen des Umreifungsbandes (112, 114).

4. Schneidkopf nach einem der vorhergehenden Ansprüche, **dadurch gekennzeichnet, dass** wenigstens ein Teil des wenigstens einen Greifers (22, 32) und das wenigstens eine Auftrennmittel (50, 60) relativ zueinander bewegbar angeordnet sind, so dass bei einer Relativbewegung zwischen Greifer (22, 32) und dem wenigstens einen Auftrennmittel (50, 60) das Umreifungsband (112, 114) in einen Wirkungsbereich des Auftrennmittels (50, 60) gelangt.

5. Schneidkopf nach einem der vorhergehenden Ansprüche, **gekennzeichnet durch** eine Sensoreinheit (90), welche eine Lage des aufzutrennenden Umreifungsbandes (112, 114) relativ zum Schneidkopf (10) und/oder relativ zur Greifeinrichtung (20) und/oder relativ zum wenigstens einen Greifer (22, 32) erkennt.

6. Schneidkopf nach Anspruch 5, **dadurch gekennzeichnet, dass** die Sensoreinheit (90) und die Greifeinrichtung (20) an einer gemeinsamen Grundplatte (12) angeordnet sind.

7. Schneidkopf nach einem der vorhergehenden Ansprüche, **dadurch gekennzeichnet, dass** die Greifeinrichtung (20) wenigstens zwei Greifer (22, 32) aufweist und dass die wenigstens zwei Greifer (22, 32) in einem konstanten Abstand zueinander angeordnet vorgesehen sind,
oder dass die wenigstens zwei Greifer (22, 32) in einem veränderlichen Abstand zueinander angeordnet vorgesehen sind.

8. Schneidkopf nach einem der Ansprüche 5 bis 7, **dadurch gekennzeichnet, dass** die Greifeinrichtung (20) in einem konstanten Abstand zur Sensoreinheit (90) angeordnet vorgesehen ist,
oder dass die Greifeinrichtung (20) wenigstens bereichsweise in einem veränderlichen Abstand zur Sensoreinheit (90) angeordnet vorgesehen ist.

9. Schneidkopf nach einem der vorhergehenden Ansprüche, **dadurch gekennzeichnet, dass** das wenigstens eine Auftrennmittel (50, 60) in Zustellrichtung des Greifer-Zustellantriebs (32, 36) relativ zu diesem in einer konstanten Position angeordnet vorgesehen ist und/oder dass das wenigstens eine Auftrennmittel (50, 60) in Zustellrichtung des Greifer-Zustellantriebs (32, 36) relativ zu diesem in einer veränderlichen Position angeordnet vorgesehen ist.

10. Schneidkopf nach einem der vorhergehenden Ansprüche, **dadurch gekennzeichnet, dass** eine Datenübertragungseinrichtung vorgesehen ist, mit der eine Lage des von dem wenigstens einen Auftrennmittel (50, 60) aufzutrennenden Umreifungsbandes (112, 114) an eine Steuer- und/oder Regeleinrichtung (120) übermittelbar ist.

11. Schneidmaschine (100) mit wenigstens einem Schneidkopf (10) nach einem der vorhergehenden Ansprüche, mit wenigstens einer ersten Bearbeitungsstation (150), **dadurch gekennzeichnet, dass** der Schneidkopf (10) an der wenigstens einen ersten Bearbeitungsstation (150) angeordnet ist.

12. Schneidmaschine nach Anspruch 11, **dadurch gekennzeichnet, dass** mehrere Bearbeitungsstationen (150) parallel vorgesehen sind.

13. Schneidmaschine nach Anspruch 11 oder 12, **dadurch gekennzeichnet, dass** eine Sammeleinrichtung (160) zum Sammeln von durch den wenigstens einen Schneidkopf (10) durchtrennten Bändern (112, 114) vorgesehen ist.

14. Schneidmaschine nach einem der Ansprüche 11 bis 13, **dadurch gekennzeichnet, dass** der wenigstens eine Schneidkopf (10) an einem Roboterarm oder an einem X-Y-Portal oder X-Y-Z-Portal befestigt ist.

15. Verfahren zum Betreiben eines Schneidkopfs (10) nach einem der Ansprüche 1 bis 10 für eine Schneidmaschine (100) nach einem der Ansprüche 11 bis14, **gekennzeichnet durch** die Schritte
- Detektieren einer Lage eines aufzutrennenden Umreifungsbandes (112,114);
- Zustellen des Schneidkopfs (10) an das aufzutrennende Umreifungsband (112, 114);
- Greifen des Umreifungsbandes (112, 114) durch den Greifer (22, 32);
- Abheben des Umreifungsbandes (112, 114) mit dem Greifer (22, 32);
- Auftrennen des Umreifungsbandes (112, 114) durch wenigstens ein Auftrennmittel (50, 60) durch eine Relativbewegung zwischen wenigstens einem Teil des Greifers (22, 32) und dem Auftrennmittel (50, 60).
